Europäisches Patentamt

European Patent Office

Office européen des brevets

(19)

(11) Veröffentlichungsnummer: **0 090 222**
**B1**

# (12) EUROPÄISCHE PATENTSCHRIFT

(45) Veröffentlichungstag der Patentschrift:
**13.08.86**

(21) Anmeldenummer: **83102385.8**

(22) Anmeldetag: **11.03.83**

(51) Int. Cl.⁴: **B 60 C 5/04,** B 60 C 5/10

(54) Gefaltetes Schlauchstück für Luftreifen.

(30) Priorität: **23.03.82 DE 3210595**

(43) Veröffentlichungstag der Anmeldung:
**05.10.83 Patentblatt 83/40**

(45) Bekanntmachung des Hinweises auf die Patenterteilung:
**13.08.86 Patentblatt 86/33**

(84) Benannte Vertragsstaaten:
**BE DE FR GB IT NL**

(56) Entgegenhaltungen:
**DE-A-2 431 922**
**FR-A-384 610**
**FR-A-538 612**
**FR-A-538 613**
**FR-A-595 794**
**GB-A-645 456**
**US-A-1 395 439**
**US-A-1 424 162**
**US-A-1 434 661**
**US-A-1 493 702**

(73) Patentinhaber: **BAYER AG, Konzernverwaltung RP Patentabteilung, D-5090 Leverkusen 1 Bayerwerk (DE)**

(72) Erfinder: **Quiring, Bernd, Dr., Albrecht- Haushofer-Strasse 2, D-5090 Leverkusen (DE)**
Erfinder: **Moormann, Gerhard, Dipl.- Ing., Pommernallee 5, D-4047 Dormagen (DE)**
Erfinder: **Niederdellmann, Georg, Dr., Heinestrasse 6, D-4047 Dormagen (DE)**

EP 0 090 222 B1

## Beschreibung

Die Erfindung betrifft ein Schlauchstück für pneumatische Reifen, insbesondere Fahrradreifen, bei dem die beiden geschlossenen Schlauchenden übereinanderliegen.

Bisher ist es üblich, bei Luftreifen für jede Reifengröße einen darauf abgestimmten torusförmigen Schlauch zu verwenden. Es ist auch bekannt (beispielsweise nach DE-A-739 848, DE-A-886 698, NL-A-77 11 463, DE-A-2 832 546), statt eines torusförmigen Schlauches ein Schlauchstück zu verwenden, das mindestens so lang wie der Radumfang ist und das auch auf den Reifendurchmesser abgestimmt ist. Bei einem als Schlauchstück ausgebildeten Schlauch ist bei gabelgeführten Rädern ein Auswechseln des Schlauches ohne Radausbau möglich. Schlauch bzw. Schlauchstück sind in der Regel aus Gummi hergestellt.

Trotz einer vereinfachten Handhabung beim Schlauchwechsel haben sich bisher aus Gummi bestehende Schlauchstücke nicht durchsetzen können, weil die Haltbarkeit entscheidend davon abhängt, daß das Schlauchstück "richtig" im Reifen liegt, daß sich im Schlauchmantel nach dem Aufpumpen keine Falten ausbilden, die eingequetscht werden können, daß die Lage der Schlauchenden fixiert und daß - wie auch bei torusförmigen Schläuchender Schlauch nicht zwischen Felge und Mantel eingeklemmt wird. Üblicherweise ist der Schlauchquerschnitt im nicht ausgedehnten Zustand kleiner als der innere. Reifenquerschnitt, wodurch sowohl eine Faltenbildung als auch das Eingeklemmtwerden vermindert werden können.

In der DE-A-2 431 922 ist ein torusförmiger Luftschlauch beschrieben, der im nicht aufgeblasenen Zustand flach aufeinanderliegende Wandungen hat und der durch Falten in der Weise gedoppelt ist, daß zumindest stellenweise vier Wandungsabschnitte des Schlauches aufeinanderliegen. Der Nachteil dieses Schlauches besteht darin, daß zur Montage das Rad ausgebaut werden muß und für jeden Raddurchmesser eine besondere Größe notwendig ist, wodurch die Ersatzteilhaltung erschwert wird. Auch sind gefaltete Reifen aus Gummi schwer herzustellen, da sie im grünen Zustand gefaltet und ausvulkanisiert werden müssen.

In der GB-A-645 456 wird ein ungefaltetes Schlauchstück beschrieben, bei dem ein geschlossenes Schlauchende in einen Hohlraum eines anderen Schlauchstückes eingeschoben wird. Diese Ausführung dürfte kaum praktikabel sein, da beim blinden Einführen ohne spätere Kontrollmöglichkeit nicht sicherzustellen ist, daß die Enden zur Vermeidung von Radschlägen stirnseits genau ineinandergreifen und daß der Reifen zur Vermeidung von Reibungswärme keine Falten besitzt.

In der FR-A-384 610 überdeckt das zusammengeklebte, zungenförmige Ende das andere pneumatische aufgeblasene Ende des ungefalteten Schlauchstückes, wobei beide Enden fest über ein Ventil verbunden sind. Ein solches Schlauchstück mit platt gedrückten Enden ist schwierig herzustellen und erfordert wegen der mechanischen Verbindung hohe Präzision in der Länge. Auch muß für jeden Raddurchmesser eine gesonderte Abmessung bereitgehalten werden.

Aufgabe der Erfindung ist es, die Haltbarkeit von Schläuchen im pneumatischen Reifen zu erhöhen und einen einfachen Einbau auch bei eingespannten Rädern mit verschiedenem Umfang bzw. Querschnitt durch wenige Einheitslängen zu ermöglichen.

Die Aufgabe wird erfindungsgemäß dadurch gelöst, daß das Schlauchstück aus thermoplastischen Elastomeren gefaltet ist

Durch die Faltung des Schlauchstückes quer zur Längsrichtung ist es möglich, das Schlauchstück in einem eingebauten Rad eines Fahrrades einfach, schnell und ohne Verwindung einzubauen. Die Gefahr des Einklemmens zwischen Felge und Mantel wird vermieden.

Die Ausbildung der Faltung kann in verschiedener Weise erfolgen. Faltung soll nicht so eng verstanden werden, daß scharfe Kanten in Radumfangsrichtung vorhanden sein müßten, vielmehr sollen auch Wellungen, Einschnürungen und andere Verengungen darunter verstanden werden; sie müssen dem Schlauch im nicht aufgeblasenen Zustand so aufgeprägt sein, daß sie nicht durch die bloße Handhabung aus dem Schlauch verschwinden. Es sollen darunter alle Formgebungsmaßnahmen verstanden werden, die bei gegebenem Schlauchumfang die Querschnittsbreite des Schlauchstückes im nicht aufgeblasenen Zustand gegenüber der maximalen Breite des "normalen" zusammengefallenen Schlauchstückes verkleinern. Es ist auch günstig, wenn mehrere Faltungen, üblicherweise spiegelsymmetrisch, bezogen auf einen Schlauchdurchmesser, vorhanden sind.

Es ist vorteilhaft, das Schlauchstück länger als den Felgenumfang zu wählen, so daß sich die Schlauchenden im Rad überlappen. Durch die überlappung wird eine Lagstabilisierung des Schlauches erreicht.

Es hat sich ferner überraschend gezeigt, daß die im nicht aufgeblasenen Zustand lose im Mantel liegenden gefalteten schmalen Enden beim Aufblasen, bei dem die aufgehenden Falten die Schlauchenden vordrücken, nicht zu einem seitlichen Schlag im Reifen führen, selbst wenn das Ventil am Schlauchende an einer Faltenflanke angebracht ist.

Besonders vorteilhaft ist die Herstellung von Schlauchstücken aus thermoplastischen Elastomeren, da die Herstellung einfacher Schläuche aus Thermoplasten einfach ist, wobei die Faltung unter Verwendung der Herstellwärme sofort oder durch spätere Aufheizung technisch sehr einfach ist.

Die Zugfestigkeit geeigneter thermoplastischer Elastomere soll mindestens 25 MPa, die Shore A Härte höchstens 96 betragen. Von besonderem Vorteil bei den gefalteten Schläuchen ist die vielseitige Verwendbarkeit.

In allen Fällen, in denen bisher Schläuche in Luftreifen verwendet wurden, deren Schlauchquerschnitt im nicht ausgedehnten Zustand kleiner als der innere Reifenquerschnitt war, können auch die entsprechenden gefalteten Schlauchstücke eingesetzt werden. Es ist aber auch möglich, gefaltete Schläuche einzusetzen, deren Schlauchquerschnitt im nicht ausgedehnten Zustand größer ist als der innere Schlauchquerschnitt, weil beim Einbau keine Probleme auftreten. Es sind in bezug auf Durchmesser und Länge erheblich weniger verschiedene Schlauchtypen als bisher erforderlich, was die Lagerhaltung verbilligt.

Beispiele der Erfindung sind in der Zeichnung schematisch dargestellt und im folgenden weiter erläutert.

Es zeigen:

Fig. 1 Schlauchquerschmitt mit einer Faltung;

Fig. 2-4 Schlauchquerschnitte mit mehreren Faltungen;

Fig. 5 + 6 Vorder- und Seitenansicht einer Scheibenanordnung zur Erzeugung eines Schlauchprofiles nach Fig.

Fig. 7 + 8 Vorder- und Seitenansicht einer Scheibenanordnung zur Erzeugung eines Schlauchprofils nach Fig. 2;

Fig. 9 Ausschnitt eines Reifens auf einer Fahrradfelge mit einem Ventil am Schlauchstückende.

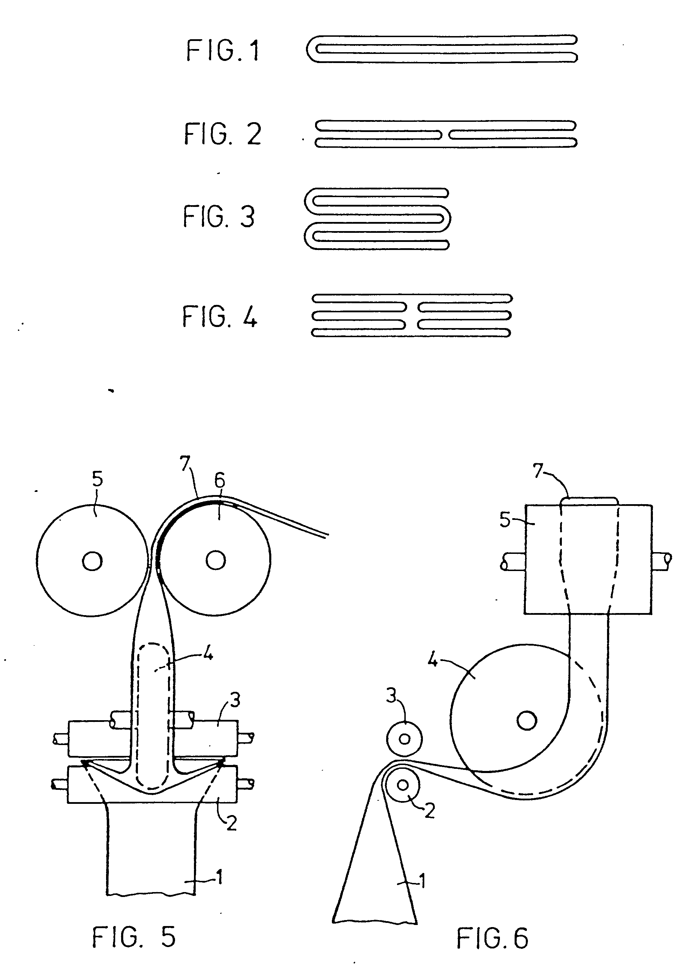

Querschnittsprofile des gefalteten Schlauchstückes sind in den Fig. 1 bis 4 schematisch dargestellt. Die Schlauchwand ist nur als Strich dargestellt, wogegen die Höhe und die Abstände zur Verdeutlichung übertrieben sind. Die Kanten der Faltungen verlaufen parallel in Schlauchlängsrichtung. Im nicht aufgeblasenen Zustand liegen die Seiten aufeinander. Ein konventionelles Schlauchstück ist im nicht aufgeblasenen Zustand näherungsweise doppelt so breit wie ein Schlauchstück gemäß Fig. 1 und 2, viermal so breit wie ein Schlauchstück gemäß Fig. 3 bzw. dreimal so breit wie ein Schlauchstück gemäß Fig. 4. Die gefalteten Schlauchstücke sind ohne Verwindungen, Quetschungen oder Falten leichter und schneller einzubauen.

Bei den meisten thermoplastischen Elastomeren vergrößert sich der Herstellungsaufwand durch die Faltungen nur unwesentlich. Man kann zunächst in bekannter Weise mit einem Schlauchextruder mit Ringspaltdüse einen Endlosschlauch herstellen; mit koaxial eingeblasener Stützluft wird verhindert, daß die Wände zusammenkleben solange sie noch nicht genügend abgekühlt sind. Eine Puderung ist im allgemeinen nicht erforderlich. Die oben allgemein als Faltungen bezeichneten Veränderungen des Querschnitts, die im wesentlichen parallel zur Schlauchlänge verlaufen, können entweder bereits durch entsprechende Düsen am Extruder erzeugt werden oder durch Scheiben und Walzen, die nach der Düse auf den Schlauch einwirken. Es ist nicht entscheidend, ob Schläuche mit einer oder zwei Längsnähten verwendet werden oder nahtlose Schläuche.

In den Fig. 5 bis 9 sind Scheiben- und Walzenanordnungen schematisch dargestellt. Aus einer nicht gezeichneten Schlauchdüse eines Extruders wird nach oben ein Schlauch 1 aus einem thermoplastischen Elastomeren abgezogen. Für Fahrradreifen nimmt man beispielsweise einen Schlauchdurchmesser von 3 cm. Die beiden Abquetschwalzen 2 und 3 in Fig. 5 sind erforderlich, damit die Stützluft im Schlauch 1 abgesperrt wird. Die Wandtemperatur vor der Scheibe beträgt hier noch etwa 30 bis 50°C. Über die Scheibe 4 wird das Schlauchband näherungsweise symmetrisch vorbeigezogen. Der Schlauch legt sich dabei näherungsweise symmetrisch um die Scheibe 4. Die Abzugswalzen 5 und 6 pressen die aufeinanderliegenden Schlauchhälften, wodurch die Faltung fixiert wird. Der gefaltete Enddurchlauf 7 wird aufgewickelt.

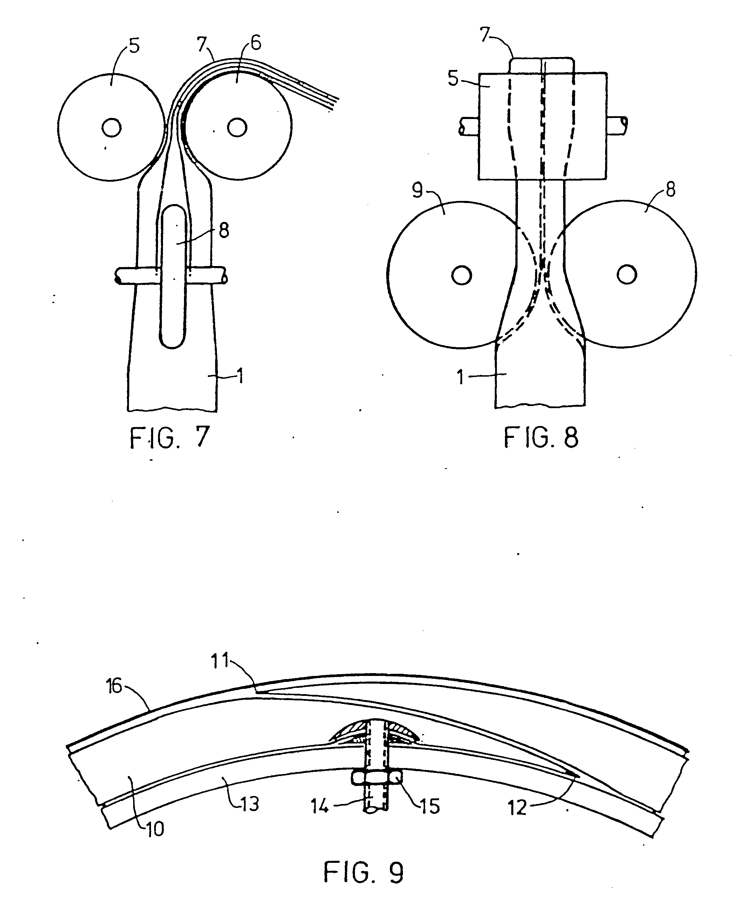

In gleicher Weise kann mit zwei Scheiben einem Schlauch eine Faltung nach Fig. 2 aufgeprägt werden. In den Fig. 8 und 9 sind analoge Teile mit den gleichen Bezugszeichen wie in den Fig. 5 und 6 gekennzeichnet. Nach diesem Verfahren lassen sich auch andere Profile längs des Schlauches aufprägen.

Geeignete Materialien für solche Schläuche bzw. Schlauchstücke sind: Gummi, insbesondere Butylkautschuk, (Co)Polymerisate von Dienen wie SBS-Copolymerisate, Polyisopren, Polychloropren, Nitrilkautschuk, Polyetherester, Polyetheramide, Polyesteramide, Polyetheresteramide, Ethylenvinylacetatcopolymere, elastomermodifiziertes Polyethylen und Polypropylen, Silikonkautschuk, Polyurethan, cycloaliphatische, aliphatische und aromatische Polyurethanharnstoffe. Bevorzugte Materialien sind Polymere, die Ether-, Carbonsäure-, Ester-, Amid-, Urethan- und/ oder Harnstoffgruppen enthalten. Besonders bevorzugte Materialien sind thermoplastische Polyurethane und Polyurethanharnstoffe.

Als bevorzugte Werkstoffe seien beispielhaft genannt: Polyetherester, wie sie z.B. aus Polyoxytetramethylenglykol, Polyoxyethylenglykol und/oder Polyoxypropylenglykol, Ethandiol, Butandiol und/oder Hexandiol usw., Phthal-, Isophthal-, Terephthalsäure, die gegebenenfalls hydriert sein können, aufgebaut sind. Ebenso kommen Blockpolyamide in Frage, die z.B. aus Polyamidhartsegmenten und Weichsegmenten wie Polyethern wie Polyoxyethylenglykol, Polyoxypropylenglykol, Polyoxytetramethylenglykol oder deren Mischungen, Adipinsäurepolyestern, amidgruppenhaltigen Ethern und/oder Estern aufgebaut sind und z.B. in den DOS 2 632 120, 2 523 991, US-Patent 4 129 715 beschrieben wurden.

Ganz besonders bevorzugte Materialien sind thermoplastische Polyurethane und Polyurethanharnstoffe, die aufgebaut sind aus

a) einer oder mehreren langkettigen Verbindungen mit im Mittel mindestens 1,8 zerewitinoffaktiven Gruppen, z.B. einem Diol, gegebenenfalls auch Aminoalkohol oder Diamin, mit einem Molekulargewicht zwischen 400 und 10 000, vorzugsweise zwischen 450 und 6000,

b) einer oder mehreren etwa zwei zerewitinoffaktive Gruppen enthaltenden-Verbindung(en) mit einem Molekulargewicht zwischen 32 und 400, bevorzugt zwischen 60 und 350 und/oder Wasser und

c) einem oder mehreren aliphatischen, cycloaliphatischen, araliphatischen, aromatischen und/oder heterocyclischen Diisocyanaten.

Als langkettige Verbindung a) mit mindestens 1,8 zerewitinoffaktiven Gruppen kommen neben Aminogruppen, Thiolgruppen und/oder Carboxylgruppen aufweisenden Verbindungen vorzugsweise Hydroxylendgruppen enthaltende Verbindungen, insbesondere mit etwa zwei zerewitinoffaktiven Gruppen, wie Polyester, Polyether, Polythioether, Polyacetale, Polycarbonate, Polyesteramide, in Frage.

Ganz besonders bevorzugt sind Polyurethane bzw. Polyurethanharnstoffe, die aufgebaut sind aus

a) einem oder mehreren aus Oxyethylen-, Oxypropylen- und/oder Oxybutyleneinheiten aufgebauten Polyethern und/oder einem oder mehreren Polyestern, deren Säurekomponente zu mindestens 50 Mol-% aus Adipinsäure besteht und deren. Glykolkomponente zu mehr als 50 Mol-% gegebenenfalls substituiertes Ethandiol, Propandiol, Butandiol, Pentandiol, Neopentylglykol und/oder-Hexandiol darstellt, Polylactonen, wie z.B. Polycaprolacton und/oder einem Polycarbonat wie Hexandiolpolycarbonat

b) einem Kettenverlängerer, der im wesentlichen aus Ethylenglykol, Butandiol-(1,4), Hexandiol-(1,6), 1,4-Bishydroxymethylencyclohexan, Hydrochinondihydroxyethylenether, Diethylenglykol und Homologe, Dipropylenglykol und höhere Homologe; Wasser, 1-Aminomethyl-3-amino-1, 5,5-trimethylcyclohexan (= Isophorondiamin) und/oder gegebenenfalls substituiertem Diaminodicyclohexylmethan und

c) gegebenenfalls substituiertes Diphenylmethandiisocyanat, Toluylendiisocyanat und/oder Hexamethylendiisocyanat. In Verbindung mit cycloaliphatischem aliphatischem Diamin können die ganz besonders bevorzugten Polyurethanharnstoffe auch Diisocyanatodicyclohexylmethan (gegebenenfalls substituiert) und/oder Isophorondiisocyanat enthalten.

Das Verhältnis von NCO-Gruppen zu Zerewitinoff-aktivem Wasserstoff sollte bevorzugt zwischen 0,97 und 1,03 liegen.

Beim Einsatz von erfindungsgemäßen Schlauchstücken in Fahrrädern hat sich beispielsweise gezeigt, daß ein einziger Schlauchdurchmesser für alle gängigen Reifentypen ausreicht und gefaltete Schläuche auf allen Felgen gut eingebaut werden können. Bei Schlauchstücken können sich die Schlauchenden mehr oder weniger überlappen, so daß auch eine einheitliche Schlauchstücklänge für Räder verschiedenen Durchmessers ausreichend sein dürfte. Es zeigt sich nämlich, daß wegen des leichten Gewichtes des Schlauches eine Unwucht keine Rolle spielt. Darüber hinaus ließe sich auch durch Ausgleichsgewichte eine Unwucht ausgleichen, was aber erst bei höheren Geschwindigkeiten wichtig wird.

In Fig. 9 ist ein Schlauch 10 mit den beiden dicht verklebten Enden 11,12 auf einer Fahrradfelge 13 montiert. Der Schlauch 10 hat in diesem Beispiel einen Querschnitt wie in Fig. 1. Das Ventil 14 ist in der Nähe eines Schlauchendes 12 eingesetzt, und auf der äußeren Faltkante des Schlauches. Die Verschraubung 15 trägt zur Lagestabilisierung des Schlauches bei. Das andere Schlauchende 11 überdeckt den Bereich des Schlauchendes 12 mit dem Ventil 14. Der Werkstoff des Schlauches ist Polyurethan; bei diesem Werkstoff bewirkt die gegenseitige Haftung der Oberflächen auch eine gewisse Fixierung des Schlauchendes 11. Der Raum zwischen Felge 13 und Mantel 16 wird beim Aufblasen des Schlauches 10 vollständig aufgefüllt. Die Reparatur von Schlauchstücken aus thermoplastischen Elastomeren ist in der Regel ohne Schwierigkeiten möglich.

Ein Schlauchstück kann auch ohne Schwierigkeiten in einen vollwertigen etwas kürzeren Schlauch umgearbeitet werden. Es wird das z. B. fehlerhafte Schlauchstück herausgeschnitten und das Ende wieder verklebt oder verschweißt. Auch torusförmige gefaltete Schläuche konnen in entsprechende gefaltete Schlauchstücke umgearbeitet werden.

## Beispiel 1

In einem Extruder mit Dreizonenschnecke mit einer Kompression von 3, L:D = 20 und einem Wellendurchmesser D von 30 mm mit ringförmiger, beheizbarer Foliendüse und Senkrechtabzug wird unter den in Tabelle 1 angegebenen Bedingungen ein thermoplastisches Polyurethan, das aufgebaut ist aus einem Adipinsäurebutandiolpolyester mit einem Durchschnittsmolekulargewicht von ca. 2200, Butan-diol-(1,4) und 4,4'-Diisocyanatodiphenylmethan mit einer Shore A Härte von 85 und einer Zugfestigkeit von 38 MPa zu einem Schlauch mit einem Durchmesser von 35 mm extrudiert.

Der Schlauch wird mit koaxial geblasener Stützluft und außen aufgebrachter-Kühlluft auf ca. 40 bis 50°C gebracht und mit Hilfe der in Abbildung 8 dargestellten zwei angetriebenen Abquetschwälzen (5, 6) zusammengepreßt und anschließend auf einer geeigneten Vorrichtung aufgewickelt. Unterhalb der Abquetschwalzen sind auf parallelen Achsen zwei freie drehbare Rollen (8, 9) angeordnet, die einander im Umfang berühren. Mit Hilfe dieser Rollen wird der Schlauch achtförmig deformiert und anschließend zwischen den oben erwähnten Abquetschwalzen auf den in Fig. 2 dargestellten Querschnitt zusammengedrückt.

Von dem aufgewickelten gefalteten Schlauch wird eine Länge von 2,32 m abgeschnitten, ca. 100 mm von einem Ende entfernt ein kreisrundes Loch mit einem Durchmesser von 7 mm in die Schlauchwand gebohrt. Durch dieses Loch wird von innen das am Fuß mit Dimethylformamid befeuchtete Ventil geschoben. Von oben wird ein Kreisring aus dem gleichen Material mit einem Durchmesser von ca. 30 mm, der in der Mitte eine 6 mm Bohrung hat, über das Ventil auf den an dieser Stelle mit Dimethylformamid befeuchteten Schlauch geschoben und mit dem Daumen (auch an das Ventil) angepreßt. Zur besseren Befestigung des Ventilsitzes kann eine Kreisscheibe aus Metall mit einer Mutter am Ventil von außen gegen die Schlauchwand geschraubt werden. 20 mm der Innenwände beider Schlauchenden werden an den gegenseitigen Berührungsflächen mit Dimethylformamid benetzt und anschließend durch Daumendruck über den ganzen Umfang kurz zusammengedrückt.

**Beispiel 2**

Es wird wie in Beispiel 1 beschrieben verfahren, jedoch wird ein thermoplastisches Polyurethan eingesetzt, das aus Hexandiolpolycarbonat mit einem Molekulargewicht von ca. 2000, einem linearen Polypropylenglykol mit etwa dem gleichen Durchschnittsmolekulargewicht, Butandiol-(1,4) und 4,4'-Diisocyanatodiphenylmethan, aufgebaut ist und eine Shore A Härte von 87 und eine Zugfestigkeit von 29 MPa hat. Die Extrusionsbedingungen sind Tabelle 1 zu entnehmen.

Bei Erzeugung der in Fig. 1 dargestellten U-Faltung wird der Schlauch in der Ringdüse aufgeblasen und auf 30 bis 40°C abgekühlt, dann zunächst zwischen den in den Fig. 5 und 6 dargestellten Walzen 2 und 3 zusammengedrückt. Dieser Streifen wird anschließend durch seitliches Herumführen um die Scheibe 4 auf die gewünschte U-Form gebracht, in den Abzugswalzen zum endgültigen Querschnitt zusammengepreßt und aufgerollt.

Das Ventil wird ohne Verklebung mit Hilfe von zwei Gummischeiben mit 7 mm Bohrung und einer Mutter, wobei die Schichten in folgender Reihenfolge übereinander angeordnet sind: Ventilfuß, Gummischeibe, Schlauchwand, Gummischeibe, Mutter (an der äußeren Spitze des U-förmigen Querschnitts) luftdicht eingebaut. Die beiden Enden des 2,40 m langen Schlauchstücks werden zwischen zwei auf 160°C erhitzten Platten auf einer Länge von ca. 40 mm zugeschweißt.

**Beispiel 3**

Es wird verfahren wie in Beispiel 1 beschrieben, jedoch wird ein Polyurethanharnstoff aus dem in Beispiel 2 beschriebenen Hexandiolpolycarbonat, 4,4'-Diisocyanatodicyclohexylmethan und Isophorondiisocyanat mit einer Shore A Härte von 90 und einer Zugfestigkeit von 47 MPa eingesetzt. Die Extrusionsbedingungen sind in Tabelle 1 beschrieben.

Von dem extrudierten Schlauch werden zwei 2,35 m lange Stücke abgeschnitten und wie in Beispiel 2 beschrieben mit Ventilen versehen. Die Enden werden auf einer Länge von 10 bis 50 mm mit Hilfe eines Lösungsmittelgemisches aus Xylol, Isopropanol und Ethylenglykolmonoethylether (Gewichtsverhältnis 3:3, 5:1) unter Beibehaltung der Faltung verklebt.

**Tabelle 1**

**Extrusionsbedingungen**

**Produkt aus Beispiel**

Extrudertemperaturen (°C)
in Förderrichtung:
Heizzone 1 195 190 210
Heizzone 2 185 195 220
Heizzone 3 180 205 225
Düse 180 195 215
Drehzahl (min-1) 25 30 25
Ausstoß (g/min) 48 50 55
Wanddicke des Schlauchs (mm) 0,25 0,4 0,2

**Patentansprüche**

1) Schlauchstück für pneumatische Reifen, insbesondere Fahrradreifen, bei dem die beiden geschlossenen Schlauchenden übereinanderliegen, dadurch gekennzeichnet, daß das Schlauchstück aus thermoplastischen Elastomeren gefaltet ist.

2) Schlauchstück nach Anspruch 1, dadurch gekennzeichnet, daß der Umfang des Schlauchstückes im nicht ausgedehnten Zustand größer als der Umfang des inneren, von Reifen und Felgenbett gebildeten Querschnitts ist.

**Claims**

1. Inner tube length for pneumatic tyres, in particular bicycle tyres, in which the two closed inner tube ends lie on top of each other, characterised in that the inner tube length is folded from thermoplastic elastomers.

2. Inner tube length according to Claim 1, characterised in that the periphery of the inner tube length in the unexpanded state is larger than the periphery of the internal cross-section formed
by the tyre and the rim base.

## Revendications

1. Pièce de boyau pour pneumatiques, en
particulier pour pneumatiques de bicyclettes, dans
laquelle les deux extrémités de boyau fermées se
superposent, caractérisée en ce que la pièce de
boyau constituée en des élastomeres
thermoplastiques est pliée.

2. Pièce de boyau selon la revendication 1,
caractérisée en ce que la circonférence de la pièce
de boyau à l'état non expansé est supérieure à la
circonférence de la section transversale interne
formée par le pneumatique et par le lit de la jante.

FIG. 1

FIG. 2

FIG. 3

FIG. 4

FIG. 5

FIG. 6

FIG. 7

FIG. 8

FIG. 9